# EUROPEAN PATENT SPECIFICATION

(11) **EP 3 827 222 B1**
(45) Date of publication and mention of the grant of the patent: **06.07.2022**
(21) Application number: 19730632.7
(22) Date of filing: 24.05.2019
(51) Int. Cl.: G01C 21/34, G01C 21/36, G08G 1/00

(54) **METHOD AND DEVICE FOR NAVIGATING TWO OR MORE USERS TO A MEETING LOCATION**
VERFAHREN UND VORRICHTUNG ZUM LEITEN VON ZWEI ODER MEHREREN BENUTZERN ZU EINEM TREFFPUNKT
DISPOSITIF PERMETTANT DE GUIDER AU MOINS DEUX UTILISATEURS VERS UN LIEU DE RENCONTRE

(43) Date of publication of application: 02.06.2021
(60) Divisional application: 22168896.3
(73) Proprietor: Google LLC, Mountain View, CA 94043 (US)
(72) Inventor: BREWINGTON, Brian, Mountain View, CA 94043 (US); UNTWAL, Jaydeep, Mountain View, CA 94043 (US); STROSNICK, Matt, Mountain View, CA 94043 (US); SHUCKER, Brian, Mountain View, CA 94043 (US); GOENKA, Vishal, Mountain View, CA 94043 (US)
(74) Representative: Smith, Jeremy Robert
(86) International application number: PCT/US2019/033890
(87) International publication number: WO 2020/242434

(56) References cited:
- EP-A1- 3 287 745
- US-A1- 2011 191 019
- US-A1- 2017 059 347
- US-A1- 2018 238 694
- US-A1- 2018 266 845

## Description

### Field of the Disclosure

The present disclosure relates to navigation directions and, in particular, to using landmarks to direct users.

### Background

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Systems that automatically route drivers between geographic locations generally utilize indications of distance, street names, building numbers, to generate navigation directions based on the route. For example, these systems can provide to a driver such instructions as "proceed for one-fourth of a mile, then turn right onto Maple Street." However, it is difficult for drivers to accurately judge distance, nor is it always easy for drivers to see street signs. Moreover, there are geographic areas where street and road signage is poor.

To provide guidance to a driver that is more similar to what another person may say to the driver, it is possible to augment navigation directions with references to prominent objects along the route, such as visually salient buildings or billboards. These prominent object can be referred to as "visual landmarks." Thus, a system can generate such navigation directions as "in one fourth of a mile, you will see a McDonald's@ restaurant on your right; make the next right turn onto Maple Street." To this end, an operator can enter descriptions and indications of locations (e.g., street addresses, coordinates) for visual landmarks, so that the system can automatically select suitable visual landmarks when generating navigation directions.

However, not every landmark is visible at all times. For example, some billboards may be brightly illuminated at night but may be generally unnoticeable during the day. On the other hand, an intricate facade of a building may be easy to notice during the day but may be poorly illuminated and accordingly unnoticeable at night.

Furthermore, at the beginning of navigation, when the user is stationary and there is no direction of movement yet, the navigation systems in general provide absolute directions such as "go North on State Street." Users can find absolute directions difficult to use, as they do not always know their orientation. However, it is difficult for a client device to determine its operation or heading while the client device is at rest.

Moreover, navigation systems typically determine the locations of users with positioning sensors, such as a Global Positioning Service (GPS) module which receives signals from several GPS satellites. However, locations determined from GPS typically are not very precise, particularly in areas with tall buildings, bridges, tunnels, etc.

EP 3287745 discloses a method of providing a meeting party with a real scene picture. The real scene picture is of a landmark associated with a destination location of the meeting.

US 2018/266845 discloses a server for identifying landmarks associated with users. Identified landmarks can be presented to users during future trips.

US 2017/059347 discloses a method of determining candidate pick-up locations. A user may select a candidate pick-up location, and the selected pick-up location may be provided to a car service or ride share platform to facilitate a pick-up.

US 2011/019019 discloses a navigation system in which a meeting point associated with a large scale point of interest may be defined.

### Summary

Aspects of the invention are defined in the accompanying claims.

To determine a user's precise location and orientation for example, when the user's client device is at rest, an interactive landmark localization system obtains the current location of the user's client device and identifies landmarks which are visible from the user's current location and/or an estimated orientation for the user. The interactive landmark localization system then sends the identified landmarks to the user's client device and requests the user to confirm that the identified landmarks are in her field of view. If the identified landmarks are not in her field of view, the interactive landmark localization system may send other landmarks to the user's client device. For example, the interactive landmark localization system may estimate that the user is facing north and may identify landmarks which are to the north of the user's current location. If the user does not see these landmarks, the interactive landmark localization system may estimate that the user is facing south and may identify landmarks which are to the south of the user's current location.

In some implementations, when the identified landmarks are not in the user's field of view, the client device may switch to an augmented reality (AR) mode, present a camera view, and provide the real-world imagery included in the camera view to the interactive landmark localization system. The interactive landmark localization system may then identify landmarks included in the camera view for example, using object detection to determine the precise location and orientation of the user. The precise location of the user may be a location determined with a greater degree of accuracy than the location determined according to a positioning device, such as a GPS. More specifically, the interactive landmark localization system may retrieve the locations, orientations, sizes, etc., of landmarks from a landmark database. The precise location and orientation of the user may be based on the locations, orientations, sizes, etc. of identified landmarks included in the camera view. For example, if a Walgreens^{®} sign in the camera view faces south and the viewpoint of the camera view is directly opposite the Walgreens@ sign, the interactive landmark localization system may determine that the user is facing north. In another example, the distance from the user's client device to the landmark may be determined based on the scale of the camera view. If the camera view is zoomed-in at a high level and a Burger King@ sign is in the camera view, the interactive landmark localization system may determine that the user is nearby the Burger King@ sign. On the other hand, if the camera view is zoomed-out and the Burger King@ sign is in the background of the camera view, the interactive landmark localization system may determine that the user is far away from the Burger King@ sign. The interactive landmark localization system may then determine the precise location of the user based on the location of the Burger King@ sign and the estimated distance of the user from the Burger King@ sign. The interactive landmark localization system may determine the orientation of the user based on the position and/or orientation of the Burger King@ sign within the camera view.

In any event, the interactive landmark localization system may also navigate two or more users to a meeting location, such as a pickup location using landmarks. In some instances, the interactive landmark localization system may direct the users to the meeting location using a shared landmark. For example, when a first user requests a ride to a destination and a second user accepts the request to transport the first user to the destination, the interactive landmark localization system may direct the first user to a pickup location based on a particular landmark within the first user's field of view. More specifically, the interactive landmark localization system may direct the first user to walk toward the particular landmark and then stand under the particular landmark while waiting for the second user to arrive. The interactive landmark localization system may also direct the second user (e.g., in a final navigation instruction) to proceed toward the particular landmark and may indicate that the first user will be standing under the particular landmark.

An example embodiment of these techniques is a method for navigating two or more users to a meeting location, executed by one or more processors. The method includes receiving a request for a first user to meet a second user at a meeting location including a first location of the first user and a second location of the second user, the first and second locations within a geographic area. The method further includes retrieving, from a database, a plurality of visual landmarks corresponding to physical objects within the geographic area, and selecting a shared visual landmark from the plurality of visual landmarks for directing the first user and the second user to the meeting location within the geographic area, the shared visual landmark being selected based on visibility from both the first location and the second location. Additionally, the method includes providing, to the first user and the second user, directions to the meeting location referencing the shared visual landmark.

Another example embodiment of these techniques is a server device for navigating two or more users to a meeting location. The server device includes one or more processors and a non-transitory computer-readable memory coupled to the one or more processors and storing instructions thereon. When executed by the one or more processors, the instructions cause the server device to receive a request for a first user to meet a second user at a meeting location including a first location of the first user and a second location of the second user, the first and second locations within a geographic area. The instructions further cause the server device to retrieve, from a database, a plurality of visual landmarks corresponding to physical objects within the geographic area, and select a shared visual landmark from the plurality of visual landmarks for directing the first user and the second user to the meeting location within the geographic area, the shared visual landmark being selected based on visibility from both the first location and the second location. Moreover, the instructions cause the server device to provide, to the first user and the second user, directions to the meeting location referencing the shared visual landmark.

### Brief Description of the Drawings

Fig. 1 is a block diagram of an example communication system in which client and server devices can operate to implement the interactive landmark localization system;
Fig. 2 is an example landmark data table included in a visual landmark database, which can be implemented in the system of Fig. 1;
Fig. 3 is an example map display depicting a viewshed for a particular landmark indicating locations from which the particular landmark is visible;
Figs. 4A and 4B are example navigation displays presented on two users' client devices directing the users to a meeting location via a shared landmark;
Fig. 5 is an example location verification display presented on a client device to verify the location and/or orientation of the client device according to the landmarks within the field of view of the user;
Fig. 6 is an example display in an AR mode presented on the client device of an area in the field of view of the user;
Fig. 7 is an example navigation display presented on the client device in response to identifying the precise location and/or orientation of the client device;
Fig. 8 is a flow diagram of an example method for navigating two or more users to a meeting location, which can be implemented in a server device; and
Fig. 9 is a flow diagram of an example method for verifying a current location or orientation of a user using landmarks, which can be implemented in a server device.

### Detailed Description

### Overview

Aspects of the disclosed subject matter provide an improved navigation system, whereby multiple users are directed to a particular location based on one or more determined mutually visual landmarks. That is, navigation is provided where the navigation for each user is dependent on visible real world objects to the user and each other user in a deterministic way.

### Example hardware and software components

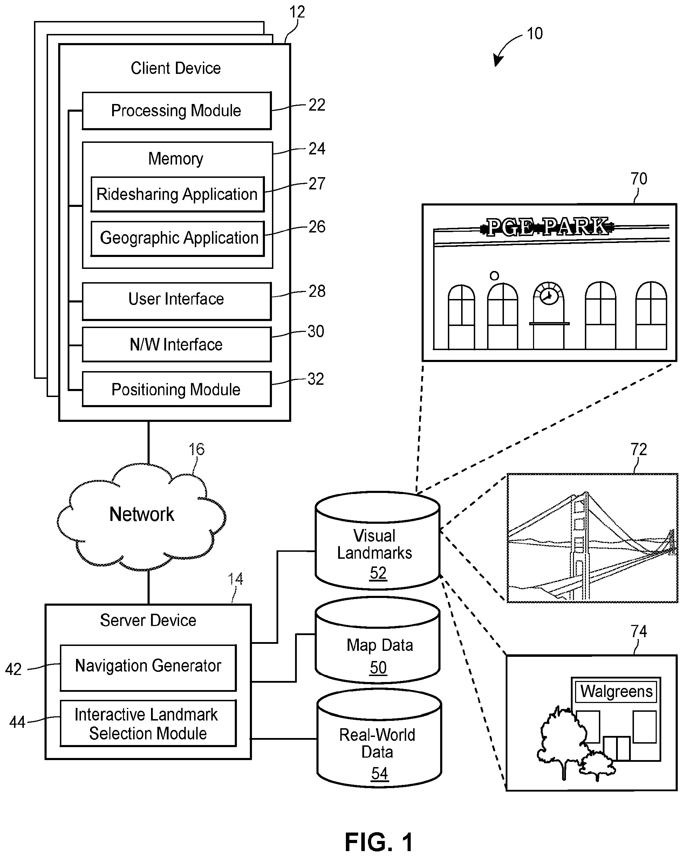

Fig. 1 illustrates an environment 10 in which at least some of the techniques for providing interactive visual landmarks can be implemented. The environment 10 includes client devices 12 and a server device 14 interconnected via a communication network 16. The network 16 may be a public network, such as the Internet, or a private network such as an intranet. The server device 14 in turn can communicate with various databases and, other server devices such as a navigation server, a map data server, a ridesharing server, a live traffic server, a weather server, etc.

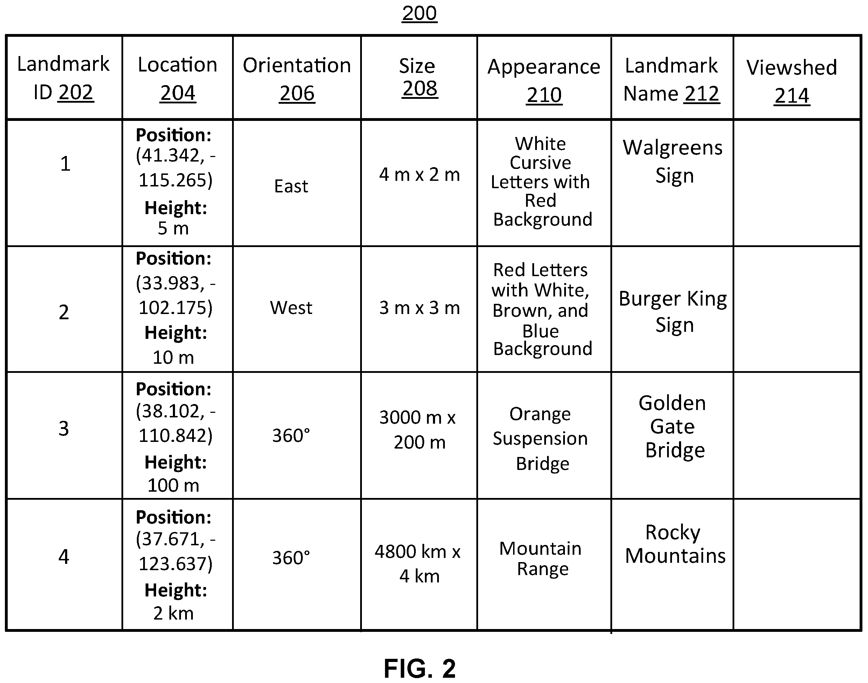

The server device 14 can be communicatively coupled to a database 52 that stores visual landmarks and geographic information for each visual landmark, such as the location and height of the landmark, the orientation that the landmark faces, the size of the landmark, the appearance of the landmark, the name of the landmark, a viewshed for the landmark indicating a set of locations from which the landmark is visible in various conditions and/or at various times of day, etc. The visual landmarks and geographic information for each visual landmark may be referred to herein as "human visual geocodes." This is described in more detail below with reference to Fig. 2. The server device 14 can also be communicatively coupled to a map database 50 and a real-world imagery database 54 storing real-world imagery for various geographic areas.

The client devices 12 can include a portable electronic device such as a smartphone, a wearable device such as a smartwatch or a head-mounted display, or a tablet computer. The client devices 12 may include a driver client device and a rider client device in a ridesharing environment, for example. In another example, the client devices 12 may include client devices of users attempting to meet at a particular meeting location. In any event, the client devices 12 may include a processing module 22, which can include one or more central processing unit (CPUs), one or more graphics processing unit (GPUs) for efficiently rendering graphics content, an application-specific integrated circuit (ASIC), or any other suitable type of processing hardware. Further, the client devices 12 can include a memory 24 made up of persistent (e.g., a hard disk, a flash drive) and/or non-persistent (e.g., RAM) components. In the example implementation illustrated in Fig. 1, the memory 24 stores instructions that implement a geographic application 26 and/or a ridesharing application 27.

Further, the client devices 12 include a camera (not shown), a user interface 28, and a network interface 30. In either case, the user interface 28 can include one or more input components such as a touchscreen, a microphone, a keyboard, etc. as well as one or more output components such as a screen or speaker.

The network interface 30 can support short-range and/or long-range communications. For example, the network interface 30 can support cellular communications, personal area network protocols such as IEEE 802.11 (e.g., Wi-Fi) or 802.15 (Bluetooth). In some implementations, the client devices 12 include multiple network interface modules to interconnect multiple devices within a client device 12 and to connect the client devices 12 to the network 16.

Further, the network interface 30 in some cases can support geopositioning. For example, the network interface 30 can support Wi-Fi trilateration. In other cases, the client devices 12 can include a dedicated positioning module 32 such as a GPS module. The client device 12 also can include other sensors such as an accelerometer, a gyroscope, a magnetometer such as a compass, etc.

With continued reference to Fig. 1, the client devices 12 can communicate with the server device 14 via the network 16, which can be a wide-area network such as the Internet. The server device 14 can be implemented in one more server devices, including devices distributed over multiple geographic locations. The server device 14 can implement a navigation instructions generator 42, and an interactive landmark selection module 44. The components 42-44 can be implemented using any suitable combination of hardware, firmware, and software. The server devices can access databases such as a map database 50, a visual landmark database 52, and a real-world imagery database 54, which can be implemented using any suitable data storage and access techniques.

In operation, the interactive landmark selection module 44 can receive a request for map data or navigation directions from a client device 12. The request can include a current location of the user and/or an estimated orientation. The interactive landmark selection module 44 may retrieve visual landmarks from the visual landmark database 52 which are within a threshold distance of the current location and viewable from the current location and/or estimated orientation of the user. More specifically, the interactive landmark selection module 44 may identify visual landmarks having geographic information which indicates that the visual landmarks are within the threshold distance of the current location and are viewable from the current location and/or estimated orientation of the user. In any event, the interactive landmark selection module 44 may provide indications of the identified visual landmarks to the client device 12 with a request for the user to confirm that the identified visual landmarks are within the user's field of view or for the user to turn until she is facing the identified visual landmarks. For example, the interactive landmark selection module 44 may provide a request, displayed on the client device 12 via the user interface 28, for the user to confirm that she can see a McDonald's^{®} sign directly in front of her.

If the user confirms that the identified visual landmarks are within the user's field of view or that she has turned to face the identified visual landmarks, for example, via a user control presented on the user interface 28, the interactive landmark selection module 44 verifies the current location and orientation of the user and determines that the precise location and orientation of the user based on the user's current location and orientation. For example, if the McDonald's^{®} sign is to the north of the user's current location, the interactive landmark selection module 44 determines the user is facing north. The precise location of the user may be a location determined with a greater degree of accuracy than the location determined according to a positioning device, such as a GPS. The server device 14 may then use the precise location and orientation of the user for providing map data, navigation data, ridesharing data, etc. to the client device 12. For example, if the user requests navigation directions to a destination location, the navigation instructions generator 42 can retrieve road geometry data, road and intersection restrictions (e.g., one-way, no left turn), road type data (e.g., highway, local road), speed limit data, etc. from the map database 50 to generate a route from the user's current location to the destination. In addition to road data, the map database 50 can store descriptions of geometry and location indications for various natural geographic features such as rivers, mountains, and forests, as well as artificial geographic features such buildings and parks. The map data can include, among other data, vector graphics data, raster image data, and text data. In an example implementation, the map database 50 organizes map data into map tiles, which generally correspond to a two-dimensional or three-dimensional organization of geospatial data into a traversable data structure such as an octree.

In any event, the navigation instructions generator 42 can use the one or more routes to generate a sequence of navigation instructions. Examples of navigation instructions include "in 500 feet, turn right on Elm St." and "continue straight for four miles." The navigation instructions generator 42 can implement natural language generation techniques to construct these and similar phrases, in the language of the user. For the initial navigation instruction, instead of providing absolute directions such as "go North on State Street," the navigation instructions generator 42 can direct the user based on the user's precise location and orientation as determined by the interactive landmark selection module 44. For example, the navigation instructions generator 42 may generate an initial navigation instruction of "continue straight on State Street," because the user is facing north. If the initial instruction requires the user to head south, the navigation instructions generator 42 may generate an initial navigation instruction of "turn around away from the McDonald's@ sign and continue straight on State Street."

The server device 14 may also use the precise location and orientation of the user to provide information regarding a meeting location to another user. For example, two users may schedule a meeting at a meeting location determined by the users, by the users' client devices 12, by the server device 14, or by another server device. A first user may arrive at the meeting location or may stop moving at a location within a threshold distance (e.g., 100 m) of the meeting location for more than a threshold amount of time (e.g., 30 seconds), as indicated by the first user's client device 12 being at rest according to the GPS module 32 or other sensors in the client device 12. Then the server device 14 may determine the precise location and orientation of the first user by providing indications of landmarks within the field of view of the first user and/or receiving a camera view of real-world imagery in front of the first user. The server device 14 may then provide the same landmarks to the second user which were provided to the first user or which were identified in the camera view of the first user's client device 12. In this manner, the second user can see the landmarks which are visible from and/or proximate to the first user's location so that the second user can find the first user.

If the user does not see the identified visual landmarks within her field of view and provides an indication that she does not see the identified visual landmarks, for example, via a user control presented on the user interface 28, the interactive landmark selection module 44 requests the client device 12 to switch to an augmented reality (AR) mode that presents a camera view of the real-world imagery in front of the client device 12. The interactive landmark selection module 44 receives the real-world imagery and identifies landmarks within the real-world imagery using object recognition. More specifically, the interactive landmark selection module 44 may obtain several template landmarks from a database. The template landmarks may include signs, or other prominent physical objects. The interactive landmark selection module 44 may identify visual features of each of the template landmarks by detecting stable regions within the template landmark that are detectable regardless of blur, motion, distortion, orientation, illumination, scaling, and/or other changes in camera perspective. The stable regions may be extracted from the template landmark using a scale-invariant feature transform (SIFT), speeded up robust features (SURF), fast retina keypoint (FREAK), binary robust invariant scalable keypoints (BRISK), or any other suitable computer vision techniques. In some implementations, keypoints may be located at high-contrast regions of the template landmark, such as edges within the template landmark. A bounding box may be formed around a keypoint and the portion of the template landmark created by the bounding box may be a feature.

The interactive landmark selection module 44 may create numerical representations of the features to generate template feature vectors, such as the width and height of a feature, RGB pixel values for the feature, a pixel position of a center point of the feature within the object, etc. Also, the interactive landmark selection module 44 may identify visual features of the camera view or portions of the camera view (also referred to herein as "objects") from the camera of the client device 12 to generate feature vectors. The interactive landmark selection module 44 may then compare the feature vectors for the camera view or feature vectors for an object within the camera view to the template feature vectors to identify one or more template objects having the closest template feature vectors to the feature vectors for the camera view from the camera of the client device 12. For example, the interactive landmark selection module 44 may identify the top three template objects having the closest template feature vectors to the feature vectors for the camera view. If a majority of the one or more identified template objects is a Walgreens^{®} sign, the interactive landmark selection module 44 may identify an object in the camera view as a Walgreens@ sign.

In any event, the interactive landmark selection module 44 may retrieve human visual geocodes or geographic information for the identified landmarks within the camera view, for example from the visual landmarks database 52 to determine the location, orientation, size, etc. of each identified landmark. When an identified landmark has more than one location, such as a Walgreens@ sign, the interactive landmark selection module 44 retrieves geographic information for the location which is closest to the approximate current location of the user. In other implementations, when more than one landmark is identified within the camera view, the interactive landmark selection module 44 determines the location for each identified landmark based on a geographic area that includes each of the identified landmarks. In any event, the interactive landmark selection module 44 determines the current location and orientation of the user based on the locations and orientations of the identified landmarks within the camera view. For example, if the Walgreens@ sign is at the corner of Main and State Street and faces east, and the camera view directly faces the Walgreens@ sign, the interactive landmark selection module 44 determines that the user is facing west and is located east of the corner of Main and State Street. Furthermore, the interactive landmark selection module 44 may determine the current location of the user based on the size of each identified landmark within the camera view. For example, the larger the Walgreens@ sign appears within the camera view, the closer the user is to the Walgreens^{®} sign.

In a method according to the invention the interactive landmark selection module 44 receives a request for navigating two or more users to a meeting location via their respective client devices 12. The interactive landmark selection module 44 can then identify landmarks for directing each of the users to the meeting location based on the orientations and locations from which the users are approaching the meeting location. The interactive landmark selection module 44 identifies a shared landmark for directing each of the users to the meeting location using the same landmark.

For example, in a ridesharing environment, a rider may request transportation services to a destination location, via a ridesharing application 27 in her rider client device 12. The driver may receive and accept the request, via a ridesharing application 27 in her driver client device 12, and the server device 14 or another server may identify a pickup location for retrieving the rider. The interactive landmark selection module 44 may then obtain the pickup location and the current locations of the driver and the rider. For example, the current locations of the driver and the rider may be determined using the techniques described above. In some implementations, the navigation instructions generator 42 may generate a route to the pickup location for the driver and the rider, and the interactive landmark selection module 44 may obtain the locations in which the final maneuvers of the respective routes are performed. For example, the navigation instructions generator 42 may generate a set of instructions for directing the driver to the pickup location, where the final instruction is to turn left from State Street onto Main Street after heading north on State Street and continue straight to arrive at the pickup location. In this example, the interactive landmark selection module 44 may obtain the intersection of State Street and Main Street as the location for the driver and the orientation for the driver as the direction the driver will be facing after making a left turn from heading north on State Street onto Main Street. In this manner, the interactive landmark selection module 44 identifies a landmark within a threshold distance of the pickup location which is visible from the location and orientation of the driver. The interactive landmark selection module 44 may then provide the identified landmark to the navigation instructions generator 42 to incorporate the identified landmark into the set of navigation instructions. For example, after directing the driver to turn left from State Street onto Main Street, the navigation instructions generator 42 may generate an additional navigation instruction to travel toward the Walgreens@ sign and the rider will be standing underneath the Walgreens@ sign. The identified landmark is a shared landmark for directing each of the users, and the navigation instructions generator 42 may generate an additional navigation instruction for the rider to travel toward the Walgreens@ sign and stand underneath the Walgreens@ sign.

The visual landmark database 52 can store information regarding prominent geographic entities that can be visible when driving (or bicycling, walking, or otherwise moving along a navigation route) and thus serve as visual landmarks. For example, the visual landmark database 52 can store human visual geocodes, such as geographic information for PGE Park 70, the Golden Gate Bridge 72, a Walgreens@ 74 in Denver, and any other suitable visual landmarks.

For each visual landmark, the visual landmark database 52 can store one or several photographs, two-dimensional or three-dimensional geographic coordinates, a textual description, the height of the landmark, the orientation that the landmark faces, the size of the landmark, the appearance of the landmark, the name of the landmark, a viewshed for the landmark indicating a set of locations from which the landmark is visible in various conditions and/or at various times of day, etc. The viewshed can differ according to the time of day, weather conditions, season, etc. Accordingly, the visual landmark database 52 can store several viewsheds for the landmark for different times of day, seasons, weather conditions, lighting conditions, traffic conditions, etc.

To populate the visual landmark database 52, the server device 14 can receive satellite imagery, photographs and videos submitted by various users, street-level imagery collected by cars equipped with specialized panoramic cameras, street and sidewalk imagery collected by pedestrians and bicyclists, etc. Similarly, the visual landmark database 52 can receive descriptions of landmarks from various sources such as operators of the server device 14 and people submitting user-generated content.

A data table 200 including an example index of human visual geocodes or geographic information for each landmark included in the visual landmark database 52 is illustrated in Fig. 2. For each landmark, the data table 200 includes a landmark identifier 202, a location of the landmark 204 including two-dimensional or three-dimensional geographic coordinates and the height of the landmark, the orientation that the landmark faces 206, the size or dimensions of the landmark 208, a textual description of the appearance of the landmark 210, the name of the landmark 212, and viewsheds 214 for the landmark indicating a set of locations from which the landmark is visible in various conditions and/or at various times of day, etc. The data table 200 may also include a photograph of the landmark.

For example, the first entry of the data table 200 includes geographic information for a Walgreens@ sign. According to the data table 200, the Walgreens^{®} sign is located at a height of 5 m and faces east. The Walgreens@ sign is 4 m wide and 2 m long and includes white cursive letters with a red background. The viewshed for the Walgreens^{®} sign may include a first set of locations from which the Walgreens@ sign is visible during the day and a second set of locations from which the Walgreens@ sign is visible at night. Since the Walgreens@ sign faces east, the viewshed may include positions to the east of the Walgreens@ sign. Additionally, larger signs or signs which are placed high above the ground may be visible from further distances than smaller signs or signs which are placed closer to the ground. In addition to signs for restaurants, stores, and other businesses, the landmarks may include natural landmarks such as the Rocky Mountains, infrastructure including bridges such as the Golden Gate Bridge, buildings, stadiums, theatres, concert halls, etc. While signs may face a particular direction and thus may be visible from that direction, other landmarks such as the Golden Gate bridge are visible from every direction.

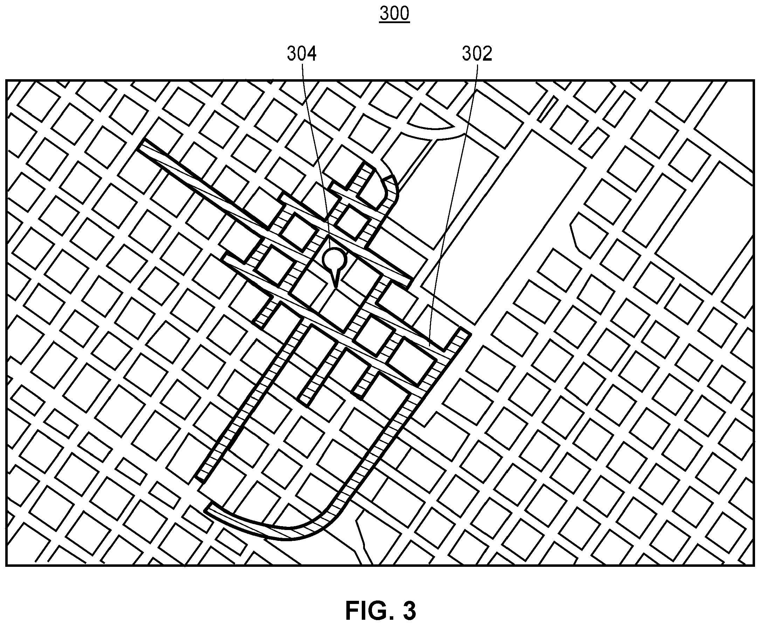

An example viewshed 302 for a particular landmark 304 (e.g., PGE Park) is illustrated in the map display 300 of Fig. 3. The viewshed 302 includes the set of points in a space from which the landmark 304 is visible. The shaded regions represent points from which at least a portion of the landmark 304 is visible. The viewshed 302 may be determined based on test points along streets and other traversable paths proximate the landmark 304. As shown, the viewshed 302 has a complex shape as a result of the landmark 304 being occluded by other objects, such as other buildings proximate the landmark 304. In this example, the landmark is visible from every direction, but the landmark 304 is visible from further away for locations to the northwest, locations to the south, and locations to the southwest of the landmark 304 than locations to the north, east, or west of the landmark. For each landmark, the visual landmark database 52 may store indications of viewsheds similar to the example viewshed 302 illustrated in Fig. 3 and including sets of locations from which the landmark is visible.

The viewshed of the landmark 304 can be determined, for instance, by accessing a three dimensional model associated with the geographic area where the landmark is located. The model can include a three dimensional representation of the landmark. In one implementation, the three dimensional model can be a stereo mesh model of the geographic area that includes a plurality of mesh triangles associated with the landmark. The model can also include or can have access to synthetic models of geographic features or other landmarks in the geographic area, such as the synthetic models provided in a virtual globe application. The model can also include textures mapped to the surfaces in the three dimensional models. The textures can include photographs or other imagery associated with the geographic area, and can depict geographic objects such as trees (with or without leaves) bridge trestles, and other structures that can occlude the visibility of landmarks in the geographic area.

The visibility of the three dimensional representation of the landmark 304 can be assessed from a plurality of different geographic points in a three dimensional space within the three dimensional model. For instance, for each geographic point, it can be determined whether the three dimensional representation of the landmark 304 is visible from the geographic point. If so, the geographic point is included in the viewshed 302 of the landmark 304.

In one implementation, a geographic point can be included in the viewshed 302 only if greater than a predefined threshold of the three dimensional representation of the landmark 304 is visible from the geographic point. The threshold can be based on any suitable metric associated with the visibility of the landmark 304. For example, the threshold can be based on the visible surface area of the landmark 304 such that if greater than a predefined surface area of the landmark 304 is visible from a geographic point, the geographic point can be included in the viewshed 302. As another example, the threshold can be based on the solid angle in steradians subtended by the feature for a given view of the landmark 304 from a geographic point such that if greater than a predefined solid angle in steradians is visible from the geographic point, the geographic point is included in the viewshed 302.

The server device 14 may use the geographic information for each landmark, including photographs of the landmark, two-dimensional or three-dimensional geographic coordinates for the landmark, a textual description of the landmark, the height of the landmark, the orientation that the landmark faces, the size of the landmark, the appearance of the landmark, the name of the landmark, and viewshed for the landmark for various conditions and/or at various times of day to determine a visibility score or ranking for each landmark from a particular location and orientation of a user. The server device 14 may then select the landmarks having the highest visibility scores or rankings for directing the user to a destination or meeting location. For example, the server device 14 may assign a higher visibility score to a landmark having a viewshed that includes the user's current location than a landmark having a viewshed that does not include the user's current location. Furthermore, the server device 14 may assign a higher visibility score to a landmark viewable from the direction that the user is currently facing than a landmark that is not viewable from the direction that the user is currently facing.

As described above, the server device 14 may receive requests from the client devices 12 for navigating multiple users to a meeting location. In some implementations, the server device 14 may receive the meeting location and the current locations of each user. In other implementations, the server device 14 may determine a meeting location as a location within a threshold distance of one of the users or a location in between the current locations of each user. For example, when a rider requests transportation services to a destination location via the ridesharing application 26 and a driver accepts the request, the server device 14 or another server, such as a ridesharing server may identify a pickup location that is within a threshold distance of the rider's current location. In another example, two users may request to meet and the server device 14 may identify a meeting location which is approximately equidistant from the current locations of the two users.

In any event, the server device 14 may generate routes, via the navigation instructions generator 42, for each user to the meeting location. In some implementations, the server device 14 may identify the final maneuver for each route or the maneuver before the final maneuver, and determine the location and orientation of the user after completing the final maneuver or the maneuver before the final maneuver. In other implementations, when the current location of a user is less than a threshold distance away from the meeting location (e.g., 100 m), the server device 14 does not generate a route to the meeting location. Instead, the server device 14 identifies a landmark visible from the user's current location which may be used to direct the user to the meeting location.

Then using the determined location and orientation of the user, the server device 14, via the interactive landmark selection module 44, may identify candidate landmarks from the visual landmarks database 52 which are visible from the determined location and orientation of the user and/or which are within a geographic area that includes the meeting location. The interactive landmark selection module 44 may identify the candidate landmarks using the viewsheds, orientations, positions, heights, dimensions, etc. of each landmark included in the visual landmarks database 52. Then the interactive landmark selection module 44 may assign a visibility score or ranking to the candidate landmarks based on several metrics including for example, the location of the candidate landmark including proximity to the meeting location, visibility based on the viewshed corresponding to the time of day, weather conditions, season, etc., size of the landmark, whether the landmark is directly facing the user according to the orientation of the user and the orientation of the landmark, etc. The interactive landmark selection module 44 may assign individual scores for each metric, such as a proximity to the meeting location score, a viewshed score, a landmark size score, a landmark orientation score, a landmark height score, etc., and aggregate or combine the individual scores in any suitable manner to generate the visibility score for the candidate landmark based on the user's determined location and orientation. In some implementations, the interactive landmark selection module 44 may select the highest scoring or ranking candidate landmark as the landmark. Then the server device 14 may provide navigation instructions to the user's client device 12 directing the user to the meeting location via the selected landmark. Also in some implementations, when a landmark is within close proximity to the meeting location (e.g., within a threshold distance of 10 m), the server device 14 may move the meeting location to the landmark location.

The interactive landmark selection module 44 may select a different landmark for directing each user to the meeting location according to the highest scoring or ranking candidate landmark based on the location and direction from which the user approaches the meeting location. In other implementations, the interactive landmark selection module 44 may select a shared landmark for directing each user to the meeting location using the same landmark. For example, the interactive landmark selection module 44 may generate a score for each candidate landmark specific to one of the users. The interactive landmark selection module 44 may then combine the user-specific scores to generate an overall score for each candidate landmark. Then the interactive landmark selection module 44 may select the candidate landmark having the highest overall score as the shared landmark. In some implementations, the shared landmark must have user-specific scores above a threshold score or user-specific rankings above a threshold ranking for each user-specific score or ranking, so that the interactive landmark selection module 44 does not select a shared landmark which is highly visible from the location of one user and difficult to see from the location of another user. In this scenario, if a candidate landmark has the highest overall score but has a user-specific score which is below the threshold score, the interactive landmark selection module 44 may select the candidate landmark with the next highest overall score until the interactive landmark selection module 44 identifies a candidate landmark having user-specific scores above the threshold score.

### Example user interfaces

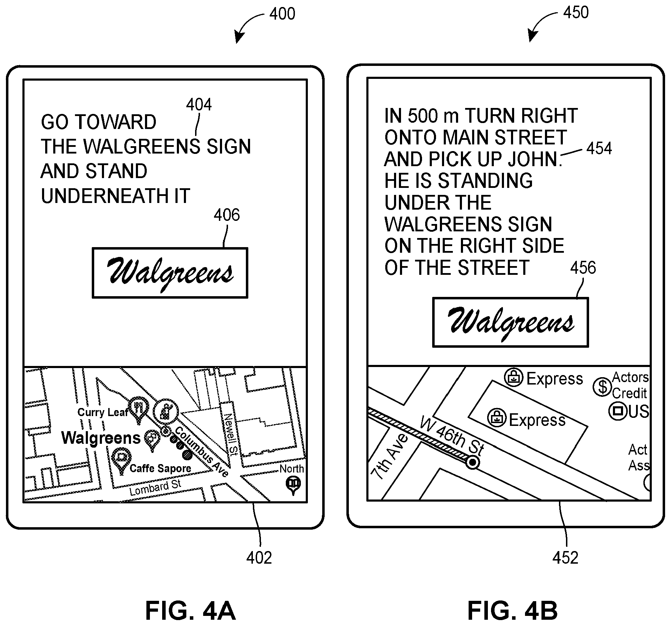

Figs. 4A-4B illustrate example navigation displays 400, 450 presented on two users' client devices 12 directing the users to a meeting location via a shared landmark. As shown in Figs. 4A-4B, the shared landmark is a Walgreens@ sign. In the example navigation display 400, the client device 12 presents a map display 402 for a rider indicating walking directions to the meeting location. The navigation display 400 also includes a navigation instruction 404 to go toward the Walgreens@ sign and stand underneath it, indicating that the meeting location is the Walgreens@ sign. Furthermore, the navigation display 400 includes a depiction of the Walgreens@ sign 406 so that the user knows what to look for. In the example navigation display 450, the client device 12 presents a map display 452 for a driver indicating driving directions to the meeting location or directions for any suitable travel mode. The navigation display 450 also includes a navigation instruction 454 to turn right onto Main Street in 500 m to pick up John who will be standing underneath the Walgreens@ sign. Furthermore, the navigation display 450 also includes a depiction of the Walgreens@ sign 456 so that the user knows what to look for. In this example, the users may be meeting due to a ridesharing arrangement, where the navigation display 400 is presented on the rider's client device 12 and the navigation display 450 is presented on the driver's client device 12.

Also as described above, the server device 14 may receive a request for map data or navigation directions from a client device 12. The request can include a current location of the user and/or an estimated orientation, for example from the GPS module 32 and/or the compass. The interactive landmark selection module 44 may retrieve visual landmarks from the visual landmark database 52 which are within a threshold distance of the current location and viewable from the current location and/or estimated orientation of the user. More specifically, the interactive landmark selection module 44 may identify visual landmarks having geographic information which indicates that the visual landmarks are within the threshold distance of the current location and are viewable from the current location and/or estimated orientation of the user. In any event, the interactive landmark selection module 44 may provide indications of the identified visual landmarks to the client device 12 with a request for the user to confirm that the identified visual landmarks are within the user's field of view or for the user to turn until she is facing the identified visual landmarks.

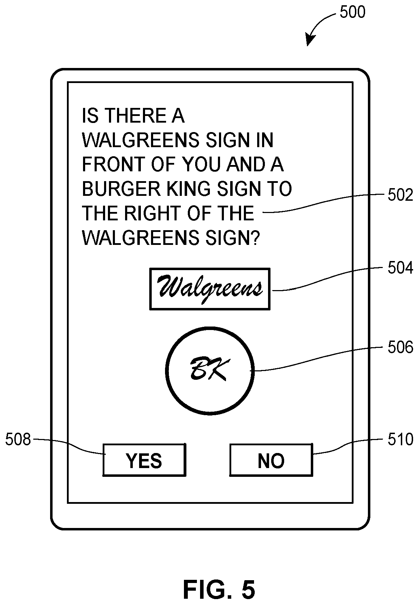

Fig. 5 illustrates an example location verification display 500 presented on a user's client device 12. For example, the location verification display 500 may be presented when the user requests navigation directions from her current location to a destination via the geographic application 26. The interactive landmark selection module 44 may then identify the user's precise location and orientation based on the visual landmarks within the user's field of view to generate an initial navigation instruction for directing the user to the destination. In another example, the location verification display 500 may be presented when the user requests transportation services via the ridesharing application 27. The interactive landmark selection module 44 may identify the user's precise location and orientation based on the visual landmarks within the user's field of view to generate an initial navigation instruction for directing the user to the pickup location or for identifying the pickup location as the user's precise location. The interactive landmark selection module 44 can then provide the user's precise location to the driver's client device 12 as the pickup location. In yet another example, the interactive landmark selection module 44 may identify the driver's precise location and orientation based on the visual landmarks within the driver's field of view. The interactive landmark selection module 44 can then provide the driver's precise location to the rider's client device 12 to direct the rider to the driver's precise location when the rider is having difficulty finding the driver.

In any event, the location verification display 500 may include a request 502 for the user to confirm that she can see the identified landmarks in front of her (e.g., a Burger King@ sign and a Walgreens@ sign). The location verification display 500 may also include depictions 504, 506 of the landmarks so that the user knows what to look for. Furthermore, the location verification display 500 includes user controls 508, 510 for confirming or denying that the identified landmarks are in the user's field of view. In other implementations, the location verification display 500 may prompt the user to take a photograph of the identified landmarks to confirm that the identified landmarks are within the user's field of view. As mentioned above, if the user does not see the landmarks 504, 506 in front of her she may turn or look around to find the landmarks 504, 506 and confirm that the identified landmarks 504, 506 are in her field of view if she finds the landmarks 504, 506 after some searching. However, if the user cannot see the identified landmarks 504, 506 even after some searching, she may select the user control 510 denying that she sees the identified landmarks 504, 506. The client device 12 may then transmit an indication of the user's response to the server device 14.

If the server device 14 receives an indication confirming that the identified landmarks 504, 506 are in the user's field of view, the server device 14 may determine the precise location and orientation for the user based on the current location and/or estimated orientation. The server device 14 may then generate navigation directions to a destination based on the precise location and orientation for the user, may present an indication of the user's precise location and orientation in a map display, may provide the precise location and orientation for the user to another client device 12 for a second user of the other client device 12 to meet the user at the precise location, may instruct the user to turn in a particular direction to view another user, a meeting location, or a landmark for directing the user to a meeting location, or may utilize the precise location and orientation for any other suitable purpose.

If, on the other hand, the server device 14 receives an indication denying that the identified landmarks 504, 506 are in the user's field of view, the server device 14 may provide a request to the client device 12 to switch to an AR mode that presents a camera view of the real-world imagery in front of the client device 12. In other implementations, the client device 12 automatically switches to the AR mode in response to receiving a selection of the user control 510 denying that the identified landmarks 504, 506 are in the user's field of view.

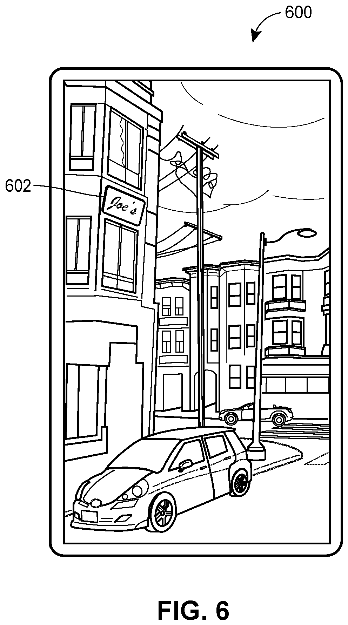

Fig. 6 illustrates an example camera view 600 of real-world imagery in the field of view of the user from the AR mode presented on the client device 12. The camera view 600 includes vehicles, buildings, a telephone pole, a street, etc. The camera view 600 also includes a sign for Joe's Restaurant 602 which is a landmark included in the visual landmark database 52 which stores geographic information for Joe's Restaurant 602. The client device 12 provides the camera view 600 to the server device 14, which may in turn, identify landmarks within the camera view 600, such as the Joe's Restaurant sign 602.

More specifically, the interactive landmark selection module 44 may obtain several template landmarks from a database, such as photographs of the template landmarks from the visual landmark database 52. The interactive landmark selection module 44 may identify visual features of each of the template landmarks by detecting stable regions within the template landmark that are detectable regardless of blur, motion, distortion, orientation, illumination, scaling, and/or other changes in camera perspective. In some implementations, keypoints may be located at high-contrast regions of the template landmark, such as edges within the template landmark. A bounding box may be formed around a keypoint and the portion of the template landmark created by the bounding box may be a feature. The interactive landmark selection module 44 may create numerical representations of the features to generate template feature vectors, such as the width and height of a feature, RGB pixel values for the feature, a pixel position of a center point of the feature within the object, etc.

The interactive landmark selection module 44 may identify visual features within the camera view 600 or visual features within objects in the camera view, such as visual features of the region in the camera view 600 that includes the Joe's Restaurant sign 602.

The interactive landmark selection module 44 may then compare the feature vectors for the camera view 600 or feature vectors for objects within the camera view 600 to the template feature vectors to identify one or more template landmarks having the closest template feature vectors to the feature vectors for the camera view 600.

In response to determining that the camera view 600 includes the Joe's Restaurant sign 602, the interactive landmark selection module 44 may obtain the geographic information for the Joe's Restaurant sign 602 from the visual landmark database 52, such as the location of the Joe's Restaurant sign 602, the orientation for the Joe's Restaurant sign 602, the height of the Joe's Restaurant sign 602, the size of the Joe's Restaurant sign 602, etc. If there are multiple instances of the Joe's Restaurant sign 602 in the visual landmark database 52, the interactive landmark selection module 44 may select the instance having a location closest to the received current location of the user. In other implementations, when more than one landmark is identified within the camera view 600, the interactive landmark selection module 44 determines the location for each identified landmark based on a geographic area that includes each of the identified landmarks. For example, Joe's Restaurant may be located in five different cities, but Joe's Restaurant may be located adjacent to a McDonald's@ in only one of the five cities. If the McDonald's^{®} is also identified within the camera view, the interactive landmark selection module 44 may select the Joe's Restaurant from the city that has an adjacent McDonald's^{®}.

In any event, the interactive landmark selection module 44 determines the precise location and orientation of the user based on the locations, orientations, heights, and/or sizes of the identified landmarks within the camera view 600. More specifically, the interactive landmark selection module 44 may determine the distance between the user and the landmark based on the size of the landmark with the camera view 600 relative to the size of the landmark. The distance from the user to the landmark may be in proportion to the size of the landmark within the camera view 600. A landmark which appears larger in the camera view 600 relative to the dimensions of the landmark may indicate that the user is nearby the landmark. For example, if the entire Golden Gate Bridge is included in the camera view 600, the interactive landmark selection module 44 may determine that the user is at least 100 m from the Golden Gate Bridge. On the other hand, if only one suspension cable for the Golden Gate Bridge is included in the camera view 600, the interactive landmark selection module 44 may determine that the user is standing on the Golden Gate Bridge or within a few meters from the Golden Gate Bridge. The interactive landmark selection module 44 may also determine the distance between the user and the landmark based on whether the landmark is in the foreground or the background of the camera view 600. If the landmark is in the foreground of the camera view 600, the landmark may be closer to the user than if the landmark is in the background of the camera view 600.

Based on the distance from the user to the landmark, the interactive landmark selection module 44 may identify a geographic area in which the user is located and may determine the user's precise location and/or orientation as a location within the geographic area. To determine the user's precise location and/or orientation as a location within the geographic area, the interactive landmark selection module 44 may determine the orientation of the landmark within the camera view 600. If the landmark is directly facing the viewpoint of the camera view 600, the interactive landmark selection module 44 may determine that the user is located in the direction that the landmark faces and the user is facing substantially the opposite direction of the direction that the landmark faces. For example, if the landmark is directly facing the viewpoint of the camera view 600 and the landmark faces south, the interactive landmark selection module 44 may determine that the user is located directly south of the landmark and is facing directly north. Then the interactive landmark selection module 44 may determine the user's precise location based on the distance from the landmark, the location of the landmark, and the orientation of the user relative to the landmark. For example, if the landmark is on the corner of Main and State Street, and the user is 50 m directly south of the landmark, the interactive landmark selection module 44 may determine that the user's precise location is a location 50 m directly south of the corner of Main and State Street, and the user's orientation is north.

If the landmark is not directly facing the viewpoint of the camera view 600, such as with the Joe's Restaurant sign 602 in the camera view 600, the interactive landmark selection module 44 determines the orientation of the landmark within the camera view 600. Then the interactive landmark selection module 44 may determine the orientation of the user relative to the landmark based on the orientation of the landmark within the camera view 600 and the direction that the landmark faces. Additionally, the interactive landmark selection module 44 may determine the orientation of the user as substantially the opposite direction of the direction of the user relative to the landmark. For example, the interactive landmark selection module 44 may determine that the Joe's Restaurant sign 602 faces south based on the geographic information for the Joe's Restaurant sign 602 included in the visual landmarks database 52. The interactive landmark selection module 44 may determine that the Joe's Restaurant sign 602 is at a 45° angle with respect to the viewpoint of the camera view 600. Accordingly, the interactive landmark selection module 44 may determine that the user is southwest of the Joe's Restaurant sign 602 and is facing northeast.

The server device 14 may then generate navigation directions in any suitable travel mode to a destination based on the precise location and orientation for the user, may present an indication of the user's precise location and orientation in a map display, may provide the precise location and orientation for the user to another client device 12 for a second user of the other client device 12 to meet the user at the precise location, may instruct the user to turn in a particular direction to view another user, a meeting location, or a landmark for directing the user to a meeting location, or may utilize the precise location and orientation for any other suitable purpose.

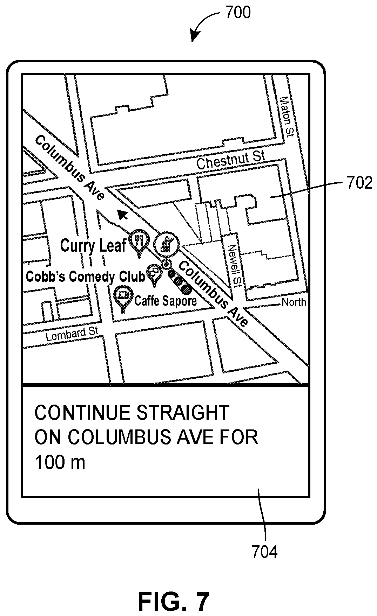

Fig. 7 illustrates an example navigation display 700 presented on the client device 12 in response to identifying the precise location and/or orientation of the client device 12. In the example navigation display 700, the client device 12 presents a map display 702 indicating walking directions from the user's precise location and/or orientation to a destination or a meeting location. The navigation display 700 also includes a navigation instruction 704 to continue straight on Columbus Avenue for 100 m. In this example, the user is facing the direction she needs to travel in to reach her destination according to her precise location and orientation. In other examples, when the user is not facing the direction she needs to travel in to reach her destination, the initial navigation instruction may provide a relative direction in which the user needs to turn to begin travelling to her destination. More specifically, the initial navigation instruction may be to turn in a particular direction relative to the direction the user is currently facing without using absolute or cardinal directions. The initial navigation instruction may be, "Turn around," "Turn to the left," "Turn to the right," etc., before proceeding straight. *Example methods for providing interactive landmarks in geographic or ridesharing applications*

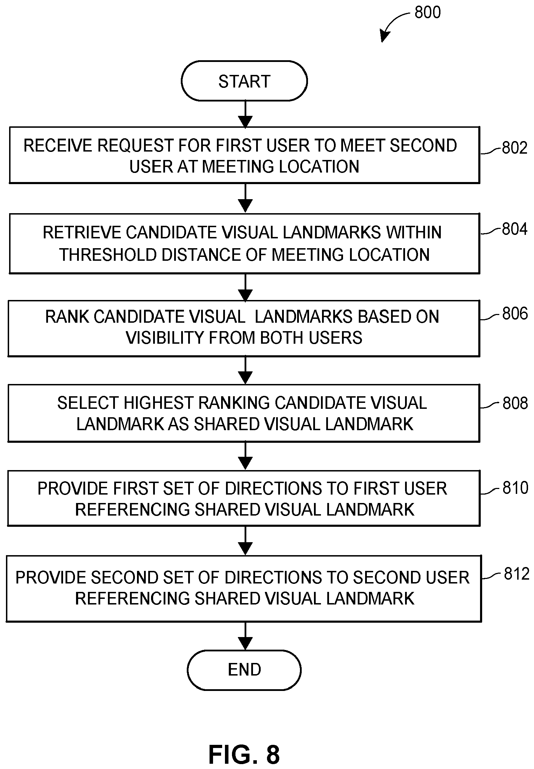

Fig. 8 illustrates a flow diagram of an example method 800 for navigating two or more users to a meeting location. The method can be implemented in a set of instructions stored on a computer-readable memory and executable at one or more processors of the server device 14. For example, the method can be implemented by the navigation instructions generator 42 and/or the interactive landmark selection module 44.

At block 802, a request is received for a first user to meet a second user at a meeting location. In some implementations, the request may include the current locations of the first and second users who are within a geographic area and the meeting location. In other implementations, the request may include the current locations of the first and second users and the server device 14 may determine the meeting location, for example based on the at least one of the current locations. For example, the request may be a request for transportation services from a first user's current location to a drop-off location. The server device 14 may then broadcast the request to drivers and may receive an indication that a second user accepted the request along with an indication of the current location of the second user. The server device 14 may then identify a meeting location which is a pickup location proximate to the first user. In any event, the server device 14 may identify the meeting location as a location within a threshold distance of one of the users or a location in between the current locations of each user.

In response to receiving the request, the server device 14 may generate routes, via the navigation instructions generator 42, for each user to the meeting location. In some implementations, the server device 14 may identify the final maneuver for each route or the maneuver before the final maneuver, and determine the location and orientation of the user after completing the final maneuver or the maneuver before the final maneuver. In other implementations, when the current location of a user is less than a threshold distance away from the meeting location (e.g., 100 m), the server device 14 does not generate a route to the meeting location. Instead, the server device 14 identifies a landmark visible from the user's current location which may be used to direct the user to the meeting location. Also in some implementations, when a landmark is within close proximity to the meeting location (e.g., within a threshold distance of 10 m), the server device 14 may move the meeting location to the landmark location.

Then using the determined location and orientation for the first user, for example after completing the final maneuver along the route, the server device 14, via the interactive landmark selection module 44, may identify candidate landmarks from the visual landmarks database 52 (block 804) which are visible from the determined location and orientation of the first user and/or which are within a geographic area that includes the meeting location. The interactive landmark selection module 44 may identify the candidate landmarks using the viewsheds, orientations, positions, heights, dimensions, etc. of each landmark included in the visual landmarks database 52. Then at block 806, the interactive landmark selection module 44 may assign a first visibility score or ranking to the candidate landmarks based on several metrics including for example, the location of the candidate landmark including proximity to the meeting location, visibility based on the viewshed corresponding to the time of day, weather conditions, season, etc., size of the landmark, whether the landmark is directly facing the first user according to the orientation of the first user and the orientation of the landmark, etc. The interactive landmark selection module 44 may assign individual scores for each metric, such as a proximity to the meeting location score, a viewshed score, a landmark size score, a landmark orientation score, a landmark height score, etc., and aggregate or combine the individual scores in any suitable manner to generate the first visibility score for the candidate landmark based on the first user's determined location and orientation.

This process is then repeated for the second user. The server device 14 may identify candidate landmarks from the visual landmarks database 52 (block 804) which are visible from the determined location and orientation of the second user and/or which are within a geographic area that includes the meeting location. Then at block 806, the interactive landmark selection module 44 may assign a second visibility score or ranking to the candidate landmarks based on several metrics including for example, proximity to the meeting location, visibility based on the viewshed corresponding to the time of day, weather conditions, season, etc., size of the landmark, whether the landmark is directly facing the second user according to the orientation of the second user and the orientation of the landmark, etc.

At block 808, the interactive landmark selection module 44 may select a shared landmark for directing each user to the meeting location using the same landmark based on the visibility scores and/or rankings assigned to each candidate landmark. As described above, the interactive landmark selection module 44 may generate a first score for each candidate landmark specific to the first user, and a second score for each candidate landmark specific to the first user. The interactive landmark selection module 44 may then aggregate or combine the user-specific scores to generate an overall score for each candidate landmark. The interactive landmark selection module 44 may rank the candidate landmarks according to their respective user-specific scores. For example, the interactive landmark selection module 44 may generate a first set of rankings for the candidate landmarks according to the first visibility scores, and a second set of rankings for the candidate landmarks according to the second visibility scores.

Then the interactive landmark selection module 44 may select the candidate landmark having the highest overall score as the shared landmark. In some implementations, the shared landmark must have user-specific scores above a threshold score or user-specific rankings above a threshold ranking for each user-specific score or ranking, so that the interactive landmark selection module 44 does not select a shared landmark which is highly visible from the location of one user and difficult to see from the location of another user. In this scenario, if a candidate landmark has the highest overall score but has a user-specific score which is below the threshold score or a user-specific ranking which is below the threshold ranking, the interactive landmark selection module 44 may select the candidate landmark with the next highest overall score until the interactive landmark selection module 44 identifies a candidate landmark having user-specific scores above the threshold score or user-specific rankings above the threshold ranking.

At block 810, the server device 14 generates and provides a first set of navigation directions to the first user referencing the shared landmark. In the example above, where the first user is a rider requesting ridesharing services, the first set of navigation directions may be walking directions to a pickup location. The first set of navigation directions may include a navigation instruction (e.g., the final navigation instruction) that incorporates the shared landmark, such as, "Continue straight until you reach the Burger King@ sign," or "Go to the corner just past the Walgreens@ sign."

At block 812, the server device 14 generates and provides a second set of navigation directions to the second user referencing the shared landmark. In the example above, where the second user is a driver picking up a rider, the second set of navigation directions may be driving directions to a pickup location. The second set of navigation directions may include a navigation instruction (e.g., the final navigation instruction) that incorporates the shared landmark, such as, "Pull over after you reach the Burger King@ sign," or "In 500 m, pick up John who will be standing underneath the Walgreens@ sign."

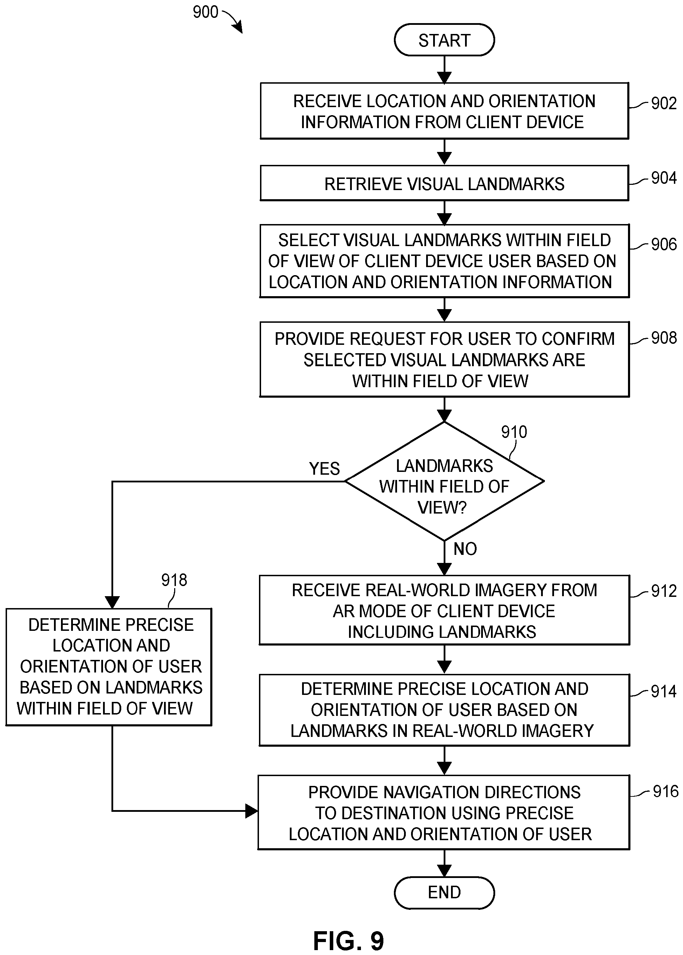

Fig. 9 illustrates a flow diagram of an example method 900 for verifying a current location or orientation of a user using landmarks. The method can be implemented in a set of instructions stored on a computer-readable memory and executable at one or more processors of the server device 14. For example, the method can be implemented by the navigation instructions generator 42 and/or the interactive landmark selection module 44.

At block 902, a current location and/or estimated orientation is received from a user's client device 12. In some implementations, the current location and/or estimated orientation may be received along with a request for map data, navigation directions, ridesharing data, etc. The current location and/or estimated orientation may be obtained from sensors within the user's client device 12, such as a GPS module 32, a compass, etc.

Then at block 904, the server device 14 and more specifically, the interactive landmark selection module 44 may retrieve candidate visual landmarks from the visual landmark database 52, and select one or more of the candidate visual landmarks which are within a threshold distance of the current location and viewable from the current location and/or estimated orientation of the user (block 906). More specifically, the interactive landmark selection module 44 may identify visual landmarks having geographic information which indicates that the visual landmarks are within the threshold distance of the current location and are viewable from the current location and/or estimated orientation of the user.

In some implementations, the interactive landmark selection module 44 may assign a visibility score or ranking to each of the candidate visual landmarks based on several metrics including for example, the location of the candidate landmark including proximity to the user's current location, visibility from the user's current location and/or estimated orientation based on the viewshed corresponding to the time of day, weather conditions, season, etc., size of the landmark, whether the landmark is directly facing the user according to the user's estimated orientation and the orientation of the landmark, etc.

The interactive landmark selection module 44 may then select one or more of the candidate visual landmarks having visibility scores above a threshold score. For example, when the visibility scores for three landmarks are above the threshold score indicating that each of the three landmarks are within the user's field of view based on the proximity to the user's current location, visibility from the user's current location and/or estimated orientation, whether the landmark is directly facing the user according to the user's estimated orientation and the orientation of the landmark, etc., the interactive landmark selection module 44 may select the three landmarks to provide to the user's client device. On the other hand, when only one landmark has a visibility score above the threshold score, the interactive landmark selection module 44 may select the one landmark to provide to the user's client device 12.

Then at block 908, the interactive landmark selection module 44 may provide indications of the identified visual landmarks to the client device 12 with a request for the user to confirm that the identified visual landmarks are within the user's field of view or for the user to turn until she is facing the identified visual landmarks. For example, the interactive landmark selection module 44 may provide a request, displayed on the client device 12 via the user interface 28, for the user to confirm that she can see a McDonald's^{®} sign directly in front of her.

If at block 910, the user confirms that the identified visual landmarks are within the user's field of view or that she has turned to face the identified visual landmarks, for example, via a user control presented on the user interface 28 of the client device 12, the interactive landmark selection module 44 may determine that the precise location and orientation for the user is the current location and/or estimated orientation (block 918). For example, if the McDonald's@ sign is to the north of the user's current location, the interactive landmark selection module 44 determines the user is facing north. The server device 14 may then use the precise location and orientation of the user for providing map data, navigation data, ridesharing data, etc. to the client device 12. For example, if the user requests navigation directions to a destination location, the navigation instructions generator 42 can retrieve road geometry data, road and intersection restrictions (e.g., one-way, no left turn), road type data (e.g., highway, local road), speed limit data, etc. from the map database 50 to generate a route from the user's precise location to the destination (block 916).

The navigation instructions generator 42 can use the one or more routes to generate a sequence of navigation instructions. For the initial navigation instruction, instead of providing absolute directions such as "go North on State Street," the navigation instructions generator 42 can direct the user based on the user's precise location and orientation as determined by the interactive landmark selection module 44. For example, the navigation instructions generator 42 may generate an initial navigation instruction of "continue straight on State Street," because the user is facing north. If the initial instruction requires the user to head south, the navigation instructions generator 42 may generate an initial navigation instruction of "turn around away from the McDonald's@ sign and continue straight on State Street."

If at block 910, the user does not see the identified visual landmarks within her field of view and provides an indication that she does not see the identified visual landmarks, for example, via a user control presented on the user interface 28 of the client device 12, the interactive landmark selection module 44 requests the client device 12 to switch to an AR mode that presents a camera view of the real-world imagery in front of the client device 12. In other implementations, the client device 12 automatically switches to the AR mode in response to receiving a selection of a user control denying that the identified landmarks are in the user's field of view.

The interactive landmark selection module 44 then receives real-world imagery from a camera view of the client device 12 and identifies landmarks within the real-world imagery using object recognition (block 912). More specifically, the interactive landmark selection module 44 may obtain several template landmarks from a database, such as photographs of the template landmarks from the visual landmark database 52. The interactive landmark selection module 44 may identify visual features of each of the template landmarks. In some implementations, keypoints may be located at high-contrast regions of the template landmark, such as edges within the template landmark. A bounding box may be formed around a keypoint and the portion of the template landmark created by the bounding box may be a feature. The interactive landmark selection module 44 may create numerical representations of the features to generate template feature vectors, such as the width and height of a feature, RGB pixel values for the feature, a pixel position of a center point of the feature within the object, etc.

Also, the interactive landmark selection module 44 may identify visual features of the camera view or visual features within objects of the camera view. The interactive landmark selection module 44 may then compare the feature vectors for the camera view or feature vectors for objects within the camera view to the template feature vectors to identify one or more template landmark having the closest template feature vectors to the feature vectors for the camera view. For each identified object in the camera view, the interactive landmark selection module 44 may identify a template landmark having the closest template feature vectors to the feature vectors for the object. Each of the template landmarks may be identified as landmarks within the camera view.

The interactive landmark selection module 44 may then retrieve geographic information for the identified landmarks within the camera view, for example from the visual landmarks database 52 to determine the location, orientation, size, etc. of each identified landmark. When an identified landmark has more than one location, such as a Walgreens^{®} sign, the interactive landmark selection module 44 retrieves geographic information for the location which is closest to the approximate current location of the user. In other implementations, when more than one landmark is identified within the camera view, the interactive landmark selection module 44 determines the location for each identified landmark based on a geographic area that includes each of the identified landmarks. For example, Joe's Restaurant may be located in five different cities, but Joe's Restaurant may be located adjacent to a McDonald's^{®} in only one of the five cities. If the McDonald's@ is also identified within the camera view, the interactive landmark selection module 44 may select the Joe's Restaurant from the city that has an adjacent McDonald's^{®}.

In any event, the interactive landmark selection module 44 determines the precise location and orientation of the user based on the locations, orientations, heights, and/or sizes of the identified landmarks within the camera view (block 914). More specifically, for each identified landmark, the interactive landmark selection module 44 may determine the distance between the user and the landmark based on the size of the landmark with the camera view relative to the size of the landmark. The distance from the user to the landmark may be in proportion to the size of the landmark within the camera view. A landmark which appears larger in the camera view relative to the dimensions of the landmark may indicate that the user is nearby the landmark. The interactive landmark selection module 44 may also determine the distance between the user and the landmark based on whether the landmark is in the foreground or the background of the camera view. If the landmark is in the foreground of the camera view, the landmark may be closer to the user than if the landmark is in the background of the camera view.

Based on the distance from the user to the landmark, the interactive landmark selection module 44 may identify a geographic area in which the user is located and may determine the user's precise location and/or orientation as a location within the geographic area. To determine the user's precise location and/or orientation as a location within the geographic area, the interactive landmark selection module 44 may determine the orientation of the landmark within the camera view. If the landmark is directly facing the viewpoint of the camera view, the interactive landmark selection module 44 may determine that the user is located in the direction that the landmark faces and the user is facing substantially the opposite direction of the direction that the landmark faces. For example, if the landmark is directly facing the viewpoint of the camera view and the landmark faces south, the interactive landmark selection module 44 may determine that the user is located directly south of the landmark and is facing directly north. Then the interactive landmark selection module 44 may determine the user's precise location based on the distance from the landmark, the location of the landmark, and the orientation of the user relative to the landmark. For example, if the landmark is on the corner of Main and State Street, and the user is 50 m directly south of the landmark, the interactive landmark selection module 44 may determine that the user's precise location is a location 50 m directly south of the corner of Main and State Street, and the user's orientation is north.

If the landmark is not directly facing the viewpoint of the camera view, the interactive landmark selection module 44 determines the orientation of the landmark within the camera view. Then the interactive landmark selection module 44 may determine the orientation of the user relative to the landmark based on the orientation of the landmark within the camera view and the direction that the landmark faces. Additionally, the interactive landmark selection module 44 may determine the orientation of the user as substantially the opposite direction of the direction of the user relative to the landmark.

As described above, the server device 14 may then use the precise location and orientation of the user for providing map data, navigation data, ridesharing data, etc. to the client device 12. For example, if the user requests navigation directions to a destination location, the navigation instructions generator 42 can retrieve road geometry data, road and intersection restrictions (e.g., one-way, no left turn), road type data (e.g., highway, local road), speed limit data, etc. from the map database 50 to generate a route from the user's precise location to the destination (block 916).

The navigation instructions generator 42 can use the one or more routes to generate a sequence of navigation instructions. For the initial navigation instruction, instead of providing absolute directions such as "go North on State Street," the navigation instructions generator 42 can direct the user based on the user's precise location and orientation as determined by the interactive landmark selection module 44. For example, the navigation instructions generator 42 may generate an initial navigation instruction of "continue straight on State Street," because the user is facing north. If the initial instruction requires the user to head south, the navigation instructions generator 42 may generate an initial navigation instruction of "turn around away from the McDonald's@ sign and continue straight on State Street."

### Additional Considerations

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a cloud computing environment or as a software as a service (SaaS). For example, at least some of the operations may be performed by a group of computers (as examples of machines including processors), these operations being accessible via a network (e.g., the Internet) and via one or more appropriate interfaces (e.g., application program interfaces (APIs).)

Upon reading this disclosure, those of ordinary skill in the art will appreciate still additional alternative structural and functional designs for the systems for using interactive landmarks in navigation. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A method (800) for navigating two or more users to a meeting location, the method comprising:
receiving (802), at one or more processors, a request for a first user to meet a second user at a meeting location including a first location of the first user and a second location of the second user, the first and second locations within a geographic area;
retrieving (804), by the one or more processors from a database (52), a plurality of visual landmarks corresponding to physical objects within the geographic area;
selecting (808), by the one or more processors, a shared visual landmark from the plurality of visual landmarks for directing the first user and the second user to the meeting location within the geographic area, the shared visual landmark being selected based on visibility from both the first location and the second location; and
providing (810, 812), by the one or more processors, to the first user and the second user, directions to the meeting location referencing the shared visual landmark.

2. The method (800) of claim 1, wherein selecting (808) a shared visual landmark for directing the first user and the second user to the meeting location includes:
identifying, by the one or more processors, candidate visual landmarks within a threshold distance of the meeting location;
assigning, by the one or more processors, first scores to the candidate visual landmarks based on visibility from the first location;
assigning, by the one or more processors, second scores to the candidate visual landmarks based on visibility from the second location;
combining, by the one or more processors, the first and second scores to generate overall scores for the candidate visual landmarks; and
selecting, by the one or more processors, the candidate visual landmark having a highest overall score as the shared visual landmark.

3. The method (800) of claim 2, further comprising:
generating, by the one or more processors, a first set of rankings for the candidate visual landmarks according to the first scores;
generating, by the one or more processors, a second set of rankings for the candidate visual landmarks according to the second scores;
wherein selecting the candidate visual landmark having the highest overall score as the shared visual landmark includes selecting, by the one or more processors, the candidate visual landmark having the highest overall score as the shared visual landmark when the candidate visual landmark having the highest overall score is ranked above a threshold ranking in both the first and second sets of rankings.

4. The method (800) of claim 3, wherein in response to determining that the candidate visual landmark having the highest overall score is not ranked above the threshold ranking in both the first and second sets of rankings, selecting, by the one or more processors, the candidate visual landmark having a next highest overall score as the shared visual landmark when the candidate visual landmark having the next highest overall score is ranked above the threshold ranking in both the first and second sets of rankings.

5. The method (800) of claim 2, wherein retrieving a plurality of visual landmarks corresponding to physical objects within the geographic area includes:
retrieving, by the one or more processors from the database (52), the plurality of visual landmarks each including one or more of:
i) an indication of a three-dimensional position of the visual landmark within the geographic area,
ii) an indication of an orientation of the visual landmark,
iii) an indication of a size of the visual landmark,
iv) an indication of a name of the visual landmark,
v) an indication of an appearance of the visual landmark, or
vi) an indication of a geographic area from which the visual landmark is visible;
preferably wherein assigning first scores to the candidate visual landmarks based on visibility from the first location includes:
determining, by the one or more processors, visibility from the first location based on one or more of: the indication of the geographic area from which the visual landmark is visible, the indication of the three-dimensional position of the visual landmark, the indication of the orientation of the visual landmark, or the indication of the size of the visual landmark.

6. The method (800) of any one of the preceding claims, wherein receiving a request for a first user to meet a second user at a meeting location includes:
receiving, by the one or more processors from a first client device of the first user, a request to transport the first user to a drop-off location;
transmitting, by the one or more processors, the request to the second user;
receiving, by the one or more processors, an indication from a second client device of the second user accepting the request; and
identifying, by the one or more processors, a pickup location for the first user as the meeting location.

7. The method (800) of any one of the preceding claims, wherein providing directions to the meeting location includes:
providing, by the one or more processors, walking directions to the first user referencing the shared visual landmark; and
providing, by the one or more processors, driving directions to the second user referencing the shared visual landmark.

8. A server device (14) for navigating two or more users to a meeting location, the server device (14) comprising:
one or more processors; and
a non-transitory computer-readable memory coupled to the one or more processors and storing instructions thereon that, when executed by the one or more processors, cause the server device (14) to:
receive a request for a first user to meet a second user at a meeting location including a first location of the first user and a second location of the second user, the first and second locations within a geographic area;
retrieve, from a database (52), a plurality of visual landmarks corresponding to physical objects within the geographic area;
select a shared visual landmark from the plurality of visual landmarks for directing the first user and the second user to the meeting location within the geographic area, the shared visual landmark being selected based on visibility from both the first location and the second location; and
provide, to the first user and the second user, directions to the meeting location referencing the shared visual landmark.

9. The server device (14) of claim 8, wherein to select a shared visual landmark for directing the first user and the second user to the meeting location, the instructions cause the server device (14) to:
identify candidate visual landmarks within a threshold distance of the meeting location;
assign first scores to the candidate visual landmarks based on visibility from the first location;
assign second scores to the candidate visual landmarks based on visibility from the second location;
combine the first and second scores to generate overall scores for the candidate visual landmarks; and
select the candidate visual landmark having a highest overall score as the shared visual landmark.

10. The server device (14) of claim 9, wherein the instructions further cause the server device (14) to:
generate a first set of rankings for the candidate visual landmarks according to the first scores;
generate a second set of rankings for the candidate visual landmarks according to the second scores;
wherein to select the candidate visual landmark having the highest overall score as the shared visual landmark, the instructions cause the server device to select candidate visual landmark having the highest overall score as the shared visual landmark when the candidate visual landmark having the highest overall score is ranked above a threshold ranking in both the first and second sets of rankings.

11. The server device (14) of claim 10, wherein in response to determining that the candidate visual landmark having the highest overall score is not ranked above the threshold ranking in both the first and second sets of rankings, the instructions cause the server device (14) to select the candidate visual landmark having a next highest overall score as the shared visual landmark when the candidate visual landmark having the next highest overall score is ranked above the threshold ranking in both the first and second sets of rankings.

12. The server device (14) of claim 9, wherein to retrieve a plurality of visual landmarks corresponding to physical objects within the geographic area, the instructions cause the server device (14) to:
retrieve, from the database (52), the plurality of visual landmarks each including one or more of:
i) an indication of a three-dimensional position of the visual landmark within the geographic area,
ii) an indication of an orientation of the visual landmark,
iii) an indication of a size of the visual landmark,
iv) an indication of a name of the visual landmark,
v) an indication of an appearance of the visual landmark, or
vi) an indication of a geographic area from which the visual landmark is visible;
preferably wherein to assign first scores to the candidate visual landmarks based on visibility from the first location, the instructions cause the server device (14) to:
determine visibility from the first location based on one or more of: the indication of the geographic area from which the visual landmark is visible, the indication of the three-dimensional position of the visual landmark, the indication of the orientation of the visual landmark, or the indication of the size of the visual landmark.

13. The server device (14) of any one of claim 9 to 12, wherein to receive a request for a first user to meet a second user at a meeting location, the instructions cause the server device to:
receive, from a first client device of the first user, a request to transport the first user to a drop-off location;
transmit the request to the second user;
receive an indication from a second client device of the second user accepting the request; and
identify a pickup location for the first user as the meeting location.

14. The server device (14) of any one of claims 9 to 13, wherein to provide directions to the meeting location, the instructions cause the server device (14) to:
provide walking directions to the first user referencing the shared visual landmark; and
provide driving directions to the second user referencing the shared visual landmark.

## Patentansprüche

1. Verfahren (800) zum Leiten von zwei oder mehreren Benutzern zu einem Treffpunkt, wobei das Verfahren umfasst:
Empfangen (802), an einem oder mehreren Prozessoren, einer Anforderung, dass ein erster Benutzer einen zweiten Benutzer an einem Treffpunkt trifft, einschließlich eines ersten Standorts des ersten Benutzers und eines zweiten Standorts des zweiten Benutzers, des ersten und zweiten Standorts innerhalb eines geographischen Bereichs;
Abrufen (804), durch den einen oder die mehreren Prozessoren aus einer Datenbank (52), einer Vielzahl von visuellen Landmarken, die physischen Objekten innerhalb des geographischen Bereichs entsprechen;
Auswählen (808), durch den einen oder die mehreren Prozessoren, einer gemeinsam genutzten visuellen Landmarke aus der Vielzahl von visuellen Landmarken zum Führen des ersten Benutzers und des zweiten Benutzers zu dem Treffpunkt innerhalb des geographischen Bereichs, wobei die gemeinsam genutzte visuelle Landmarke auf Basis der Sichtbarkeit sowohl von dem ersten Standort als auch dem zweiten Standort aus ausgewählt wird; und
Bereitstellen (810, 812), durch den einen oder die mehreren Prozessoren, an den ersten Benutzer und den zweiten Benutzer,
einer Wegbeschreibung zu dem Treffpunkt unter Bezugnahme auf die gemeinsam genutzte visuelle Landmarke.

2. Verfahren (800) nach Anspruch 1, wobei das Auswählen (808) einer gemeinsam genutzten visuellen Landmarke zum Führen des ersten Benutzers und des zweiten Benutzers zu dem Treffpunkt beinhaltet:
Identifizieren, durch den einen oder die mehreren Prozessoren, von in Frage kommenden visuellen Landmarken innerhalb einer Schwellenentfernung von dem Treffpunkt;
Zuweisen, durch den einen oder die mehreren Prozessoren, erster Bewertungen zu den in Frage kommenden visuellen Landmarken auf Basis der Sichtbarkeit von dem ersten Standort aus;
Zuweisen, durch den einen oder die mehreren Prozessoren, zweiter Bewertungen zu den in Frage kommenden visuellen Landmarken auf Basis der Sichtbarkeit von dem zweiten Standort aus;
Kombinieren, durch den einen oder die mehreren Prozessoren, der ersten und zweiten Bewertungen, um Gesamtbewertungen für die in Frage kommenden visuellen Landmarken zu erzeugen; und
Auswählen, durch den einen oder die mehreren Prozessoren, der in Frage kommenden visuellen Landmarke mit einer höchsten Gesamtbewertung als gemeinsam genutzte visuelle Landmarke.

3. Verfahren (800) nach Anspruch 2, ferner umfassend:
Erzeugen, durch den einen oder die mehreren Prozessoren, eines ersten Satzes von Einstufungen für die in Frage kommenden visuellen Landmarken gemäß den ersten Bewertungen;
Erzeugen, durch den einen oder die mehreren Prozessoren, eines zweiten Satzes von Einstufungen für die in Frage kommenden visuellen Landmarken gemäß den zweiten Bewertungen;
wobei das Auswählen der in Frage kommenden visuellen Landmarke mit der höchsten Gesamtbewertung als gemeinsam genutzte visuelle Landmarke das Auswählen, durch den einen oder die mehreren Prozessoren, der in Frage kommenden visuellen Landmarke mit der höchsten Gesamtbewertung als gemeinsam genutzte visuelle Landmarke beinhaltet, wenn die in Frage kommende visuelle Landmarke mit der höchsten Gesamtbewertung sowohl in dem ersten als auch zweiten Satz von Einstufungen oberhalb einer Schwelleneinstufung eingestuft wird.

4. Verfahren (800) nach Anspruch 3, wobei als Reaktion auf die Bestimmung, dass die in Frage kommende visuelle Landmarke mit der höchsten Gesamtbewertung sowohl in dem ersten als auch zweiten Satz von Einstufungen nicht oberhalb der Schwelleneinstufung eingestuft wird, die Auswahl, durch den einen oder die mehreren Prozessoren, der in Frage kommenden visuellen Landmarke mit einer nächsthöchsten Gesamtbewertung als gemeinsam genutzte visuelle Landmarke erfolgt, wenn die in Frage kommende visuelle Landmarke mit der nächsthöchsten Gesamtbewertung sowohl in dem ersten als auch zweiten Satz von Einstufungen oberhalb der Schwelleneinstufung eingestuft wird.

5. Verfahren (800) nach Anspruch 2, wobei das Abrufen einer Vielzahl von visuellen Landmarken, die physischen Objekten innerhalb des geographischen Bereichs entsprechen, beinhaltet:
Abrufen, durch den einen oder die mehreren Prozessoren aus der Datenbank (52), der Vielzahl von visuellen Landmarken, die jeweils eines oder mehrere von Folgendem beinhalten:
i) einer Angabe einer dreidimensionalen Position der visuellen Landmarke innerhalb des geographischen Bereichs,
ii) einer Angabe einer Orientierung der visuellen Landmarke,
iii) einer Angabe einer Größe der visuellen Landmarke,
iv) einer Angabe eines Namens der visuellen Landmarke,
v) einer Angabe eines Erscheinens der visuellen Landmarke, oder
vi) einer Angabe eines geographischen Bereichs, von dem aus die visuelle Landmarke sichtbar ist;
bevorzugt, wobei das Zuweisen erster Bewertungen zu den in Frage kommenden visuellen Landmarken auf Basis der Sichtbarkeit von dem ersten Standort aus beinhaltet:
Bestimmen, durch den einen oder die mehreren Prozessoren, der Sichtbarkeit von dem ersten Standort aus auf Basis von einem oder mehreren von: der Angabe des geographischen Bereichs, von dem aus die visuelle Landmarke sichtbar ist, der Angabe der dreidimensionalen Position der visuellen Landmarke, der Angabe der Orientierung der visuellen Landmarke oder der Angabe der Größe der visuellen Landmarke.

6. Verfahren (800) nach einem der vorhergehenden Ansprüche, wobei das Empfangen einer Anforderung, dass ein erster Benutzer einen zweiten Benutzer an einem Treffpunkt trifft, beinhaltet:
Empfangen, durch den einen oder die mehreren Prozessoren aus einer ersten Client-Vorrichtung des ersten Benutzers, einer Anforderung, den ersten Benutzer zu einem Absetzort zu befördern;
Übertragen, durch den einen oder die mehreren Prozessoren, der Anforderung an den zweiten Benutzer;
Empfangen, durch den einen oder die mehreren Prozessoren, einer Angabe aus einer zweiten Client-Vorrichtung, dass der zweite Benutzer die Anforderung akzeptiert; und
Identifizieren, durch den einen oder die mehreren Prozessoren, eines Abholorts für den ersten Benutzer als Treffpunkt.

7. Verfahren (800) nach einem der vorhergehenden Ansprüche, wobei das Bereitstellen einer Wegbeschreibung zu dem Treffpunkt beinhaltet:
Bereitstellen, durch den einen oder die mehreren Prozessoren, einer Wegbeschreibung zu Fuß an den ersten Benutzer unter Bezugnahme auf die gemeinsam genutzte visuelle Landmarke; und
Bereitstellen, durch den einen oder die mehreren Prozessoren, von Fahranweisungen an den zweiten Benutzer unter Bezugnahme auf die gemeinsam genutzte visuelle Landmarke.

8. Servervorrichtung (14) zum Leiten von zwei oder mehreren Benutzern zu einem Treffpunkt, wobei die Servervorrichtung (14) umfasst:
einen oder mehrere Prozessoren; und
einen nicht-transitorischen computerlesbaren Speicher, der mit dem einen oder den mehreren Prozessoren gekoppelt ist und Anweisungen darauf speichert, die bei Ausführung durch den einen oder die mehreren Prozessoren die Servervorrichtung (14) veranlassen zum:
Empfangen einer Anforderung, dass ein erster Benutzer einen zweiten Benutzer an einem Treffpunkt trifft, einschließlich eines ersten Standorts des ersten Benutzers und eines zweiten Standorts des zweiten Benutzers, des ersten und zweiten Standorts innerhalb eines geographischen Bereichs;
Abrufen, aus einer Datenbank (52), einer Vielzahl von visuellen Landmarken, die physischen Objekten innerhalb des geographischen Bereichs entsprechen;
Auswählen einer gemeinsam genutzten visuellen Landmarke aus der Vielzahl von visuellen Landmarken zum Führen des ersten Benutzers und des zweiten Benutzers zu dem Treffpunkt innerhalb des geographischen Bereichs, wobei die gemeinsam genutzte visuelle Landmarke auf Basis der Sichtbarkeit sowohl von dem ersten Ort als auch dem zweiten Ort aus ausgewählt wird; und
Bereitstellen, an den ersten Benutzer und den zweiten Benutzer, einer Wegbeschreibung zu dem Treffpunkt unter Bezugnahme auf die gemeinsam genutzte visuelle Landmarke.

9. Servervorrichtung (14) nach Anspruch 8, wobei, zum Auswählen einer gemeinsam genutzten visuellen Landmarke zum Führen des ersten Benutzers und des zweiten Benutzers zu dem Treffpunkt, die Anweisungen die Servervorrichtung (14) veranlassen zum:
Identifizieren von in Frage kommenden visuellen Landmarken innerhalb einer Schwellenentfernung von dem Treffpunkt;
Zuweisen erster Bewertungen zu den in Frage kommenden visuellen Landmarken auf Basis der Sichtbarkeit von dem ersten Standort aus;
Zuweisen zweiter Bewertungen zu den in Frage kommenden visuellen Landmarken auf Basis der Sichtbarkeit von dem zweiten Standort aus;
Kombinieren der ersten und zweiten Bewertungen, um Gesamtbewertungen für die in Frage kommenden visuellen Landmarken zu erzeugen; und
Auswählen der in Frage kommenden visuellen Landmarke mit einer höchsten Gesamtbewertung als gemeinsam genutzte visuelle Landmarke.

10. Servervorrichtung (14) nach Anspruch 9, wobei die Anweisungen die Servervorrichtung (14) ferner veranlassen zum:
Erzeugen eines ersten Satzes von Einstufungen für die in Frage kommenden visuellen Landmarken gemäß den ersten Bewertungen;
Erzeugen eines zweiten Satzes von Einstufungen für die in Frage kommenden visuellen Landmarken gemäß den zweiten Bewertungen;
wobei, zum Auswählen der in Frage kommenden visuellen Landmarke mit der höchsten Gesamtbewertung als gemeinsam genutzte visuelle Landmarke, die Anweisungen die Servervorrichtung veranlassen, in Frage kommende visuelle Landmarke mit der höchsten Gesamtbewertung als gemeinsam genutzte visuelle Landmarke auszuwählen, wenn die in Frage kommende visuelle Landmarke mit der höchsten Gesamtbewertung sowohl in dem ersten als auch zweiten Satz von Einstufungen oberhalb einer Schwelleneinstufung eingestuft wird.

11. Servervorrichtung (14) nach Anspruch 10, wobei als Reaktion auf die Bestimmung, dass die in Frage kommende visuelle Landmarke mit der höchsten Gesamtbewertung sowohl in dem ersten als auch zweiten Satz von Einstufungen nicht oberhalb der Schwelleneinstufung eingestuft wird, die Anweisungen die Servervorrichtung (14) veranlassen, die in Frage kommende visuelle Landmarke mit einer nächsthöchsten Gesamtbewertung als gemeinsam genutzte visuelle Landmarke auszuwählen, wenn die in Frage kommende visuelle Landmarke mit der nächsthöchsten Gesamtbewertung sowohl in dem ersten als auch zweiten Satz von Einstufungen oberhalb der Schwelleneinstufung eingestuft wird.

12. Servervorrichtung (14) nach Anspruch 9, wobei, zum Abrufen einer Vielzahl von visuellen Landmarken, die physischen Objekten innerhalb des geographischen Bereichs entsprechen, die Anweisungen die Servervorrichtung (14) veranlassen zum:
Abrufen, aus der Datenbank (52), der Vielzahl von visuellen Landmarken, die jeweils eines oder mehrere von Folgendem beinhalten:
i) einer Angabe einer dreidimensionalen Position der visuellen Landmarke innerhalb des geographischen Bereichs,
ii) einer Angabe einer Orientierung der visuellen Landmarke,
iii) einer Angabe einer Größe der visuellen Landmarke,
iv) einer Angabe eines Namens der visuellen Landmarke,
v) einer Angabe eines Erscheinens der visuellen Landmarke, oder
vi) einer Angabe eines geographischen Bereichs, von dem aus die visuelle Landmarke sichtbar ist;
bevorzugt, wobei, zum Zuweisen erster Bewertungen zu den in Frage kommenden visuellen Landmarken auf Basis der Sichtbarkeit von dem ersten Standort aus, die Anweisungen die Servervorrichtung (14) veranlassen zum:
Bestimmen der Sichtbarkeit von dem ersten Ort aus auf Basis von einem oder mehreren von: der Angabe des geographischen Bereichs, von dem aus die visuelle Landmarke sichtbar ist, der Angabe der dreidimensionalen Position der visuellen Landmarke, der Angabe der Orientierung der visuellen Landmarke oder der Angabe der Größe der visuellen Landmarke.

13. Servervorrichtung (14) nach einem der Ansprüche 9 bis 12, wobei zum Empfangen einer Anforderung, dass ein erster Benutzer einen zweiten Benutzer an einem Treffpunkt trifft, die Anweisungen die Servervorrichtung veranlassen zum:
Empfangen, aus einer ersten Client-Vorrichtung des ersten Benutzers, einer Anforderung, den ersten Benutzer zu einem Absetzort zu befördern;
Übertragen der Anforderung an den zweiten Benutzer;
Empfangen einer Angabe aus einer zweiten Client-Vorrichtung, dass der zweite Benutzer die Anforderung akzeptiert; und
Identifizieren eines Abholorts für den ersten Benutzer als Treffpunkt.

14. Servervorrichtung (14) nach einem der Ansprüche 9 bis 13, wobei, zum Bereitstellen einer Wegbeschreibung zu dem Treffpunkt, die Anweisungen die Servervorrichtung (14) veranlassen zum:
Bereitstellen einer Wegbeschreibung zu Fuß an den ersten Benutzer unter Bezugnahme auf die gemeinsam genutzte visuelle Landmarke; und
Bereitstellen von Fahranweisungen an den zweiten Benutzer unter Bezugnahme auf die gemeinsam genutzte visuelle Landmarke.

## Revendications

1. Procédé (800) pour diriger deux utilisateurs ou plus vers un lieu de rendez-vous, le procédé comprenant :
la réception (802), au niveau d'un ou de plusieurs processeurs, d'une demande pour qu'un premier utilisateur rencontre un second utilisateur à un lieu de rendez-vous comprenant un premier lieu du premier utilisateur et un second lieu du second utilisateur, les premier et second lieux se trouvant dans une zone géographique ;
la récupération (804), par l'un ou plusieurs processeurs à partir d'une base de données (52), d'une pluralité de points de repère visuels correspondant à des objets physiques dans la zone géographique ;
la sélection (808), par l'un ou plusieurs processeurs, d'un point de repère visuel partagé parmi la pluralité de points de repère visuels pour diriger le premier utilisateur et le second utilisateur vers le lieu de rendez-vous dans la zone géographique, le point de repère visuel partagé étant sélectionné sur la base de la visibilité depuis à la fois depuis le premier lieu et le second lieu ; et
la fourniture (810, 812), par l'un ou plusieurs processeurs, au premier utilisateur et au second utilisateur, de directions vers le lieu du rendez-vous faisant référence au point de repère visuel partagé.

2. Procédé (800) selon la revendication 1, dans lequel la sélection (808) d'un point de repère visuel partagé pour diriger le premier utilisateur et le second utilisateur vers le lieu de rendez-vous comprend :
l'identification, par l'un ou plusieurs processeurs, de repères visuels candidats à une distance seuil du lieu de rendez-vous ;
l'attribution, par l'un ou plusieurs processeurs, de premiers scores aux points de repère visuels candidats sur la base de la visibilité depuis le premier lieu ;
l'attribution, par l'un ou plusieurs processeurs, de seconds scores aux points de repère visuels candidats sur la base de la visibilité depuis le second lieu ;
la combinaison, par l'un ou plusieurs processeurs, des premiers et seconds scores pour générer des scores globaux pour les points de repère visuels candidats ; et
la sélection, par l'un ou plusieurs processeurs, du point de repère visuel candidat ayant le score global le plus élevé comme le point de repère visuel partagé.

3. Procédé (800) selon la revendication 2, comprenant en outre :
la génération, par l'un ou plusieurs processeurs, d'un premier ensemble de classements pour les points de repère visuels candidats selon les premiers scores ;
la génération, par l'un ou plusieurs processeurs, d'un second ensemble de classements pour les points de repère visuels candidats selon les seconds scores ;
dans lequel la sélection du point de repère visuel candidat ayant le score global le plus élevé comme le point de repère visuel partagé comprend la sélection, par l'un ou plusieurs processeurs, du point de repère visuel candidat ayant le score global le plus élevé comme le point de repère visuel partagé lorsque le point de repère visuel candidat ayant le score global le plus élevé est classé au-dessus d'un classement seuil à la fois dans les premier et second ensembles de classements.

4. Procédé (800) selon la revendication 3, dans lequel, en réponse à la détermination que le point de repère visuel candidat ayant le score global le plus élevé n'est pas classé au-dessus du classement seuil à la fois dans les premier et second ensembles de classements, la sélection, par l'un ou plusieurs processeurs, du point de repère visuel candidat ayant le prochain score global le plus élevé comme le point de repère visuel partagé lorsque le point de repère visuel candidat ayant le score global le plus élevé suivant est classé au-dessus du classement seuil à la fois dans les premier et second ensembles de classements.

5. Procédé (800) selon la revendication 2, dans lequel la récupération d'une pluralité de points de repère visuels correspondant à des objets physiques dans la zone géographique comprend :
la récupération, par l'un ou plusieurs processeurs à partir de la base de données (52), de la pluralité de points de repère visuels comprenant chacun un ou plusieurs éléments parmi :
i) une indication d'une position tridimensionnelle du point de repère visuel dans la zone géographique,
ii) une indication d'une orientation du point de repère visuel,
iii) une indication d'une taille du point de repère visuel,
iv) une indication d'un nom du point de repère visuel,
v) une indication d'une apparence du point de repère visuel, ou
vi) une indication d'une zone géographique à partir de laquelle le point de repère visuel est visible ;
de préférence dans lequel l'attribution de premiers scores aux points de repère visuels candidats sur la base de la visibilité depuis le premier lieu comprend :
la détermination, par l'un ou plusieurs processeurs, de la visibilité à partir du premier lieu sur la base d'un ou de plusieurs éléments parmi : l'indication de la zone géographique depuis laquelle le point de repère visuel est visible, l'indication de la position tridimensionnelle du point de repère visuel, l'indication de l'orientation du point de repère visuel, ou l'indication de la taille du point de repère visuel.

6. Procédé (800) selon l'une quelconque des revendications précédentes, dans lequel la réception d'une demande pour qu'un premier utilisateur rencontre un second utilisateur à un lieu de rendez-vous comprend :
la réception, par l'un ou plusieurs processeurs en provenance d'un premier dispositif client du premier utilisateur, d'une demande de transport du premier utilisateur vers un lieu de dépose ;
la transmission, par l'un ou plusieurs processeurs, de la demande au second utilisateur ;
la réception, par l'un ou plusieurs processeurs, d'une indication en provenance d'un second dispositif client que le second utilisateur accepte la demande ; et
l'identification, par l'un ou plusieurs processeurs, d'un lieu de prise en charge pour le premier utilisateur comme le lieu de rendez-vous.

7. Procédé (800) selon l'une quelconque des revendications précédentes, dans lequel la fourniture de directions vers le lieu de rendez-vous comprend :
la fourniture, par l'un ou plusieurs processeurs, de directions de marche au premier utilisateur faisant référence au point de repère visuel partagé ; et
la fourniture, par l'un ou plusieurs processeurs, de directions de conduite au second utilisateur faisant référence au point de repère visuel partagé.

8. Dispositif serveur (14) pour diriger deux utilisateurs ou plus vers un lieu de rendez-vous, le dispositif serveur (14) comprenant :
un ou plusieurs processeurs ; et
une mémoire non transitoire lisible par ordinateur couplée à l'un ou plusieurs processeurs et stockant des instructions sur celle-ci qui, lorsqu'elles sont exécutées par l'un ou plusieurs processeurs, amènent le dispositif serveur (14) à :
recevoir une demande pour qu'un premier utilisateur rencontre un second utilisateur à un lieu de rendez-vous comprenant un premier lieu du premier utilisateur et un second lieu du second utilisateur, les premier et second lieux se situant dans une zone géographique ;
récupérer, à partir d'une base de données (52), une pluralité de points de repère visuels correspondant à des objets physiques se situant dans la zone géographique ;
sélectionner un point de repère visuel partagé parmi la pluralité de points de repère visuels pour diriger le premier utilisateur et le second utilisateur vers le lieu de rendez-vous dans la zone géographique, le point de repère visuel partagé étant sélectionné sur la base de la visibilité depuis à la fois le premier lieu et le second lieu ; et
fournir, au premier utilisateur et au second utilisateur, des directions vers le lieu de rendez-vous faisant référence au point de repère visuel partagé.

9. Dispositif serveur (14) selon la revendication 8, dans lequel pour sélectionner un point de repère visuel partagé pour diriger le premier utilisateur et le second utilisateur vers le lieu de rendez-vous, les instructions amènent le dispositif serveur (14) à :
identifier des points de repère visuels candidats à une distance seuil du lieu de rendez-vous ;
attribuer des premiers scores aux points de repère visuels candidats sur la base de la visibilité depuis le premier lieu ;
attribuer des seconds scores aux points de repère visuels candidats sur la base de la visibilité depuis le second lieu ;
combiner les premier et second scores pour générer des scores globaux pour les points de repère visuels candidats ; et
sélectionner le point de repère visuel candidat ayant le score global le plus élevé comme le point de repère visuel partagé.

10. Dispositif serveur (14) selon la revendication 9, dans lequel les instructions amènent en outre le dispositif serveur (14) à :
générer un premier ensemble de classements pour les points de repère visuels candidats selon les premiers scores ;
générer un second ensemble de classements pour les points de repère visuels candidats selon les seconds scores ;
dans lequel pour sélectionner le point de repère visuel candidat ayant le score global le plus élevé comme le point de repère visuel partagé, les instructions amènent le dispositif serveur à sélectionner le point de repère visuel candidat ayant le score global le plus élevé comme le point de repère visuel partagé lorsque le point de repère visuel candidat ayant le score global le plus élevé est classé au-dessus d'un classement seuil dans les premier et second ensembles de classements.

11. Dispositif serveur (14) selon la revendication 10, dans lequel en réponse à la détermination que le point de repère visuel candidat ayant le score global le plus élevé n'est pas classé au-dessus du classement seuil à la fois dans les premier et second ensembles de classements, les instructions amènent le dispositif serveur (14) à sélectionner le point de repère visuel candidat ayant le prochain score global le plus élevé comme le point de repère visuel partagé lorsque le point de repère visuel candidat ayant le prochain score global le plus élevé est classé au-dessus du classement seuil à la fois dans les premier et second ensembles de classements.

12. Dispositif serveur (14) selon la revendication 9, dans lequel pour récupérer une pluralité de points de repère visuels correspondant à des objets physiques se situant dans la zone géographique, les instructions amènent le dispositif serveur (14) à :
récupérer, à partir de la base de données (52), la pluralité de points de repère visuels comprenant chacun un ou plusieurs éléments parmi :
i) une indication d'une position tridimensionnelle du point de repère visuel dans la zone géographique,
ii) une indication d'une orientation du point de repère visuel,
iii) une indication d'une taille du point de repère visuel,
iv) une indication d'un nom du point de repère visuel,
v) une indication d'une apparence du point de repère visuel, ou
vi) une indication d'une zone géographique depuis de laquelle le point de repère visuel est visible ;
de préférence dans lequel pour attribuer des premiers scores aux points de repère visuels candidats sur la base de la visibilité depuis le premier lieu, les instructions amènent le dispositif serveur (14) à :
déterminer la visibilité depuis le premier lieu sur la base d'un ou plusieurs éléments parmi : l'indication de la zone géographique depuis laquelle le point de repère visuel est visible, l'indication de la position tridimensionnelle du point de repère visuel, l'indication de l'orientation du point de repère visuel, ou l'indication de la taille du point de repère visuel.

13. Dispositif serveur (14) selon l'une quelconque des revendications 9 à 12, dans lequel pour recevoir une demande pour qu'un premier utilisateur rencontre un second utilisateur à un lieu de rendez-vous, les instructions amènent le dispositif serveur à :
recevoir, en provenance d'un premier dispositif client du premier utilisateur, une demande de transport du premier utilisateur vers un lieu de dépose ;
transmettre la demande au second utilisateur ;
recevoir une indication en provenance d'un second dispositif client que le second utilisateur accepte la demande ; et
identifier un lieu de prise en charge pour le premier utilisateur comme le lieu de rendez-vous.

14. Dispositif serveur (14) selon l'une quelconque des revendications 9 à 13, dans lequel pour fournir des directions vers le lieu de rendez-vous, les instructions amènent le dispositif serveur (14) à :
fournir des directions de marche au premier utilisateur faisant référence au repère visuel partagé ; et
fournir des directions de conduite au second utilisateur faisant référence au point de repère visuel partagé.
